# FASCICULE DE BREVET EUROPEEN

(11) **EP 2 744 644 B1**
(45) Date de publication et mention de la délivrance du brevet: **27.05.2015**
(21) Numéro de dépôt: 12758536.2
(22) Date de dépôt: 14.08.2012
(51) Int. Cl.: B29D 11/00, B29C 65/48, G02C 7/04

(54) **PROCEDE, DISPOSITIF ET PIECE COMPOSITE POUR LA FABRICATION D'UNE LENTILLE HYBRIDE**
VERFAHREN, VORRICHTUNG UND VERBUNDTEIL ZUR HERSTELLUNG EINER HYBRIDLINSE
PROCESS, DEVICE AND COMPOSITE PART FOR MANUFACTURING A HYBRID LENS

(30) Priorité: 16.08.2011 FR 1102519
(43) Date de publication de la demande: 25.06.2014
(73) Titulaire: Lentilles, 14000 Caen (FR)
(72) Inventeur: VEILLARD Emmanuel, F-14000 Caen (FR)
(74) Mandataire: Benech, Frédéric
(86) Numéro de dépôt international: PCT/FR2012/000338
(87) Numéro de publication internationale: WO 2013/024213

(56) Documents cités:
- EP-A1- 1 832 913
- WO-A1-94/06621
- FR-A1- 2 956 752
- GB-A- 1 417 650
- US-A- 2 225 040
- US-A- 3 984 506

## Description

La présente invention concerne un procédé selon la revendication 1 de fabrication d'une lentille de contact hybride du type formé d'une partie centrale rigide connectée à une partie périphérique souple par un matériau adhésif.

Elle concerne également un dispositif de fabrication d'une telle lentille selon la revendication 13, une pièce composite permettant l'obtention d'une telle lentille après usinage, ainsi que la lentille hybride elle-même selon la revendication 17.

On connaît déjà des lentilles mixtes ou hybrides qui permettent d'allier en une seule lentille les caractéristiques avantageuses de chacune des deux grandes familles de lentilles, à savoir d'un côté les lentilles rigides perméables au gaz (LRPG) et de l'autre côté les lentilles souples hydrophiles (LSH).

Dans ce type de lentilles, le but recherché est d'obtenir les excellents résultats optiques d'une lentille rigide, qui permettent de bien compenser les irrégularités cornéennes, avec le confort des lentilles souples.

Le document GB 1 417 650 décrit ainsi une lentille hybride du type ci-dessus, selon le préambule de la revendication 17.

Très peu d'explications sont néanmoins fournies sur son procédé de fabrication, les différents modes de jonction envisageables visant essentiellement une connexion entre les deux parties de la lentille se formant par soudage lors de la polymérisation.

Si d'autres moyens sont invoqués, comme une connexion chimique ou encore par soudage par induction, par fusion ou par pression, aucune précision n'est donnée sur les étapes précisément suivies.

Tout au plus comprend-on qu'un adhésif peut être prévu entre les deux parties, à savoir la partie rigide et la partie souple, sans que l'on sache comment il serait introduit. Le seul procédé un peu détaillé fait en fait état du coulage sous forme liquide autour de la partie rigide, de la partie souple avant polymérisation de cette dernière. GB /417650 décrit un procédé selon le préambule de la revendication 1.

Les autres procédés connus (par exemple décrits dans les documents PCT US 2005/004368 ou WO 94/06621), concernent la fabrication de lentilles hybrides par moulage de la partie souple sur la partie rigide, avec ou non une zone intermédiaire entre les deux facilitant la fixation de l'une sur l'autre.

Pour réaliser de tels moulages, il est donc nécessaire de prévoir des moules et une opération de polymérisation de la partie souple en présence de la partie rigide.

De tels procédés de fabrication des lentilles présentent des inconvénients, les lentilles obtenues n'étant pas satisfaisantes et/ou peu modulables.

Les lentilles présentent en effet, du fait des difficultés de polymériser un matériau hydrophile en présence d'un matériau non hydrophile, des problèmes de connexion de l'un avec l'autre.

Par ailleurs compte tenu de la nécessité d'utiliser des moules, ceux-ci limitent les dimensions des lentilles obtenues, à moins de multiplier le nombre de moules, ce qui présente un coût important.

La présente invention vise à fournir un procédé, un dispositif, une matrice intermédiaire de fabrication ou pièce composite, pour obtention d'une lentille hybride, ainsi qu'une telle lentille, répondant mieux que ceux antérieurement connus aux exigences de la pratique notamment en ce qu'elle permet une fabrication extrêmement simple et rapide de lentilles hybrides de qualité pour un coût faible et avec une grande modularité, en palliant aux différents inconvénients mentionnés ci-dessus.

Pour cela elle part d'une idée différente de celle de l'art antérieur, qui propose des procédés de fabrication cherchant à obtenir une bonne solidarisation entre partie rigide et partie souple des lentilles par formation de cette dernière sur la partie rigide directement ou indirectement avant polymérisation.

Avec l'invention on ne cherche pas à obtenir une polymérisation de l'une en présence de l'autre mais on part de deux palets déjà existants et déjà polymérisés, à savoir un souple et un rigide, qu'on va coller l'un sur l'autre.

Par palet on entend un petit cylindre de diamètre et de hauteur déterminés, par exemple et en général de 12,7 mm de diamètre et de 5,5 mm d'épaisseur.

Ces palets sont fabriqués notamment dans le commerce par des constructeurs comme les sociétés Contamac ou Polymer Technologies.

De ce fait leur coût peut être considérablement minimisé.

Le problème que pose le collage d'une partie souple sur une partie rigide est cependant complexe.

En effet la partie souple hydrophile modifie son volume et sa surface en fonction de son degré d'hydratation. Ainsi lorsque, après avoir collé une partie rigide de lentille sur une partie souple, la lentille souple étant sèche pour permettre à la colle de prendre, on met cette dernière en condition de fonctionnement nominal (à savoir hydratée), une modification du volume de la partie souple entraîne un gondolement de celle-ci et/ou une fragilisation au niveau de sa fixation avec la partie rigide, ce qui rend impossible la pose sur l'oeil d'un patient.

Pour résoudre ce problème, l'invention propose en particulier une étape initiale de collage de palets, c'est-à-dire du palet de matériau rigide perméable au gaz d'un côté et du palet souple hydrophile de l'autre, mais après hydratation du palet souple. Un séchage ultérieur de la pièce composite ainsi constituée est ensuite réalisé avant usinage à l'aide d'un outillage classique, puis remise ultérieure en configuration nominale de fonctionnement de la lentille obtenue par humidification appropriée.

Celle-ci retrouve alors les conditions initiales du collage entre les deux palets, sans déformation.

Il est ainsi évité tout gondolage de la lentille souple en activité et/ou un maintien en contrainte de l'intérieur de la lentille, source de fragilisation. La lentille présente alors un galbe final adaptable à l'oeil d'un patient.

Un autre avantage important de l'invention est lié à la possibilité inattendue de déterminer simplement le diamètre final de la partie rigide par une seule opération, c'est à dire par la taille de la pièce composite à une profondeur choisie correspondante.

Dans le but de pallier aux inconvénients de l'art antérieur et d'obtenir les avantages indiqués ci-dessus, la présente invention propose notamment un procédé de fabrication d'une lentille de contact hybride formée d'une partie centrale rigide connectée à une partie périphérique souple par un matériau adhésif, caractérisée en ce que
à partir d'un palet rigide perméable à l'oxygène et d'un palet souple hydrophile préalablement hydraté à un premier taux d'hydratation déterminé, on forme par collage d'un palet sur l'autre une pièce composite comprenant trois couches superposées, à savoir une première couche formée par le palet rigide, une deuxième couche, de liaison, formée par le matériau adhésif et une troisième couche formée par le palet souple,
on sèche ladite pièce composite pendant un temps déterminé suffisant pour permettre la déshydratation du palet souple à un second taux d'hydratation déterminé inférieur au premier, puis
on taille à sec par un outil d'usinage (tournage-polissage) ladite pièce composite en présentant la face de la partie souple hydrophile côté de l'outil (diamant de taille) pour obtenir la lentille hybride, en ménageant une bande de dégagement sur le pourtour externe de la partie périphérique rigide.

Par bande de dégagement on entend une couronne périphérique de la partie rigide agencée pour créer un espace entre ladite partie rigide de la lentille et la cornée, espace qui va permettre le décollement facile de la lentille en évitant un effet de ventouse entre les deux.

La qualité inattendue du résultat in situ en milieu humide à partir de la pièce composite a en effet parfois pour effet secondaire que certaines lentilles collent à la cornée à cause de forces de capillarité importantes sur l'oeil, ce qui est évité grâce à l'existence de la bande de dégagement.

Dans des modes de réalisation avantageux on a de plus recours à l'une et/ou à l'autre des dispositions suivantes :
- on détermine le diamètre de la zone rigide par l'usinage plus ou moins profond de la pièce composite ;
- le matériau adhésif comprend du cyanoacrylate. Le cyanoacrylate contient du cyanure, rendant son utilisation a priori impropre mais de façon totalement inattendue se révèle absolument dénué de nocivité après séchage de la lentille.
En effet, lorsque le matériau adhésif se présente dans son état liquide (avant polymérisation), des émanations irritantes constituées de monomères de cyanoacrylate sous forme vapeur, sont dégagées. Cependant, sous l'action de l'humidité, les monomères de cyanoacrylate polymérisent de façon immédiate et deviennent totalement inertes. Une jonction entre la zone rigide et la jupe souple hydrophile de la lentille totalement inoffensive est ainsi obtenue;
- on effectue un traitement de surface du palet rigide avant collage ;
- on effectue un traitement de surface du palet souple sec avant collage ;
- le traitement de surface est un traitement au plasma ;
- on taille au préalable le palet rigide pour que sa surface de collage présente une forme convexe et le palet souple pour que sa surface de collage présente à l'état hydraté une forme concave complémentaire de ladite forme convexe ;
- le premier taux d'hydratation est compris entre 50% et 100% ;
- le premier taux d'hydratation est compris entre 54% et 70% ;
- le premier taux d'hydratation est compris entre 55% et 60% ;
- le second taux d'hydratation est inférieur à 10% ;
- le second taux d'hydratation est inférieur à 2%.

Par taux d'hydratation on entend un % dans lequel un taux de 100% correspond au pourcentage d'absorption d'eau maximale pour le matériau (saturation) et 0% une dessiccation complète dudit matériau.

Le coefficient de dilatation du matériau hydrophile, communiqué par le fabricant, permet de calculer les dimensions du palet hydrophile (diamètre et épaisseur) pour un taux d'hydratation de 100%. L'évolution des dimensions du palet hydrophile en fonction du taux d'hydratation suivant une loi linéaire, il est possible de déterminer les dimensions du palet hydrophile (diamètre et épaisseur) pour un taux d'hydratation quelconque, noté τ et compris entre 0 et 100%. Pour un taux d'hydratation τ donné, connaissant alors le diamètre et l'épaisseur du palet hydrophile, le volume du palet hydrophile hydraté peut être calculé. La différence entre le volume du palet hydrophile hydraté et le volume du palet hydrophile sec (τ = 0%) correspond au volume d'eau (et donc à la masse d'eau) ayant servi à l'hydratation. L'évaluation du séchage du matériau composite s'effectue par suivi de la perte de masse d'eau au cours du temps (en comparaison de la masse d'eau ayant servi initialement à l'hydratation du palet).

L'invention propose également un dispositif de fabrication d'une lentille de contact hybride mettant en oeuvre le procédé ci-dessus décrit. US 2225040A décrit un dispositif selon le préambule de la revendication 13.

Elle concerne également un dispositif de fabrication d'une lentille de contact hybride selon la revendication 13.

Avantageusement les moyens d'hydratation comportent une balance de mesure du poids moyen d'un palet souple, une pipette volumétrique d'alimentation en sérum physiologique d'une enceinte étanche de rétention dudit palet souple, et des moyens de calcul du temps d'hydratation à partir du poids moyen dudit palet souple et du taux d'hydratation recherché.

Dans un mode de réalisation avantageux le dispositif comporte des moyens de préparation des surfaces desdits palets par un traitement au plasma froid.

Un tel traitement permet de créer en surface des sites hydrophiles en augmentant l'énergie de surface des matériaux assurant ainsi une meilleure mouillabilité.

Egalement avantageusement les moyens de séchage de la pièce composite comportent des réceptacles hermétiques de rétention des palets avec du matériau dessicant.

L'invention propose par ailleurs une pièce composite pour fabrication d'une lentille de contact hybride formée d'une partie centrale rigide connectée à une partie périphérique souple par un matériau adhésif, caractérisée en ce que elle comprend un palet rigide perméable à l'oxygène, formant une première couche, un palet souple hydrophile hydraté à un premier taux d'hydratation déterminé, formant une troisième couche, et un matériau adhésif de liaison entre première et troisième couches, formant une deuxième couche, intermédiaire, de liaison.

Avantageusement le matériau adhésif est agencé pour se dégrader au bout d'une durée déterminée.

Egalement avantageusement le matériau adhésif contenant du cyanoacrylate, représente entre 1% et 2,5% en masse par rapport à la masse totale du matériau composite.

Dans des modes de réalisation avantageux, le premier taux d'hydratation, pour le matériau GM Advance à 49% d'hydrophilie fourni par (étape 15) la société Contamac (ou son équivalent) est compris entre 54% et 60% et/ou le palet rigide présente une surface de collage de forme convexe et le palet souple une surface de collage de forme concave complémentaire à ladite forme convexe, ce qui permet des angles de fixation entre les deux parties souple et rigide plus efficaces au niveau de la tenue.

L'invention propose également une lentille hybride fabriquée à partir du procédé et/ou utilisant le dispositif tel que décrit ci-avant, par la taille d'une pièce composite telle qu' également précisée ci-dessus.

Avantageusement une telle lentille a son diamètre de partie rigide déterminé par la profondeur d'usinage de la pièce composite.

L'invention sera mieux comprise à la lecture de la description qui suit de modes de réalisation particuliers donnés ci-après à titre d'exemples non limitatifs.

L'invention se réfère aux dessins qui l'accompagnent dans lesquels :
La figure 1 est un schéma illustrant la fabrication d'une lentille hybride selon un mode de réalisation de l'invention.
La figure 2 est un organigramme donnant les étapes du mode de réalisation du procédé selon l'invention plus particulièrement décrit ici.
La figure 3 montre en coupe deux modes de réalisation de la zone de suture entre partie rigide et partie souple.
La figure 4 est un exemple de courbe de séchage obtenue avec une pièce composite selon un mode de réalisation de l'invention.
La figure 5 est une photo agrandie au microscope électronique à balayage (MEB) de la zone de jonction entre un palet rigide et un palet souple hydrophile dans un mode de réalisation de l'invention, illustrant le résultat exceptionnel obtenu.
La figure 6 est une vue en coupe de la périphérie de la partie souple montrant un mode de réalisation d'une bande de dégagement selon l'invention.
La figure 7 est une vue schématique d'un dispositif selon un mode de réalisation de l'invention.

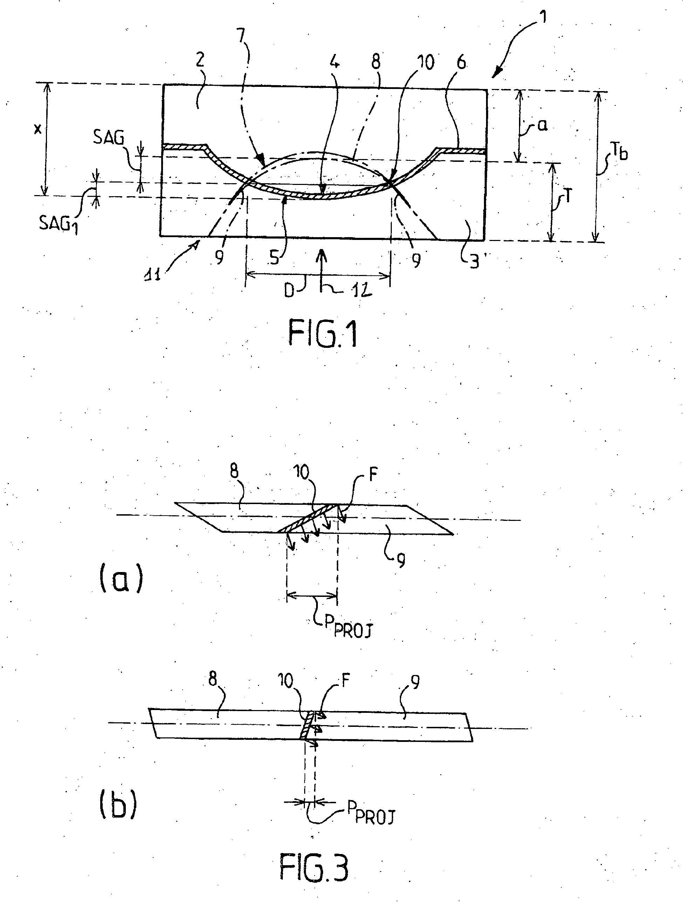

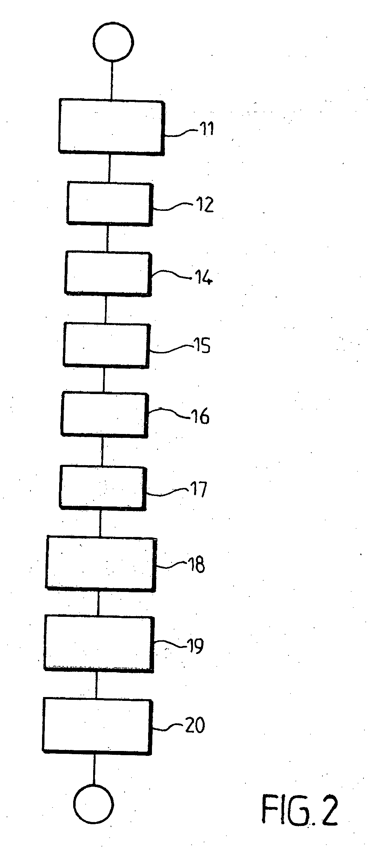

La figure 1 montre (en coupe) une pièce composite 1 mise en oeuvre dans le procédé de fabrication tel qu'il sera précisé en référence à l'organigramme de la figure 2.

La pièce 1 est formée à partir d'un palet 2 en matériau rigide et d'un palet 3 en matériau souple hydrophile préalablement humidifié comme cela sera décrit ci-après, à un taux d'hydratation déterminé.

Le palet rigide 2 comprend une surface convexe 4 par exemple sphérique et le palet souple 3 une surface concave 5 complémentaire de la surface 4.

La pièce composite comprend de plus une couche intermédiaire 6 de colle ou de matériau adhésif d'épaisseur de quelques microns, par exemple entre 20 et 30 microns, représentée de façon grossie sur la figure à titre d'illustration, entre les surfaces respectives 4 et 5 des palets 2 et 3, par exemple préalablement traitées au plasma.

Après séchage de la pièce la lentille va pouvoir être usinée pour former ladite lentille hybride 7 munie d'une partie rigide 8 et d'une couronne externe souple 9 reliée à la partie rigide par le cordon de colle 10.

Dans la suite de la description on utilisera les mêmes numéros de références pour désigner les mêmes éléments ou des éléments similaires.

La figure 2 montre un organigramme de fabrication d'une lentille selon le mode de réalisation et d'invention plus particulièrement décrit ici.

A partir des palets cylindriques rigides 2 et de palets cylindriques souples 3 hydrophiles du commerce préalablement rassemblés (étape 11), par exemple ceux commercialisés sous les références GM Advance 49% de la société Contamac pour le palet souple et Optimum extra DK 100 de la même société Contamac pour le palet rigide, et avec les outils d'usinage classiques assistés par ordinateur et connus de l'homme du métier, on usine d'une part une surface creuse ou concave 5 (étape 12) sur le palet 3 et d'autre part une surface bombée ou convexe 4 (étape 13) sur le palet 2.

Plus précisément, la partie rigide est ici usinée pour créer une surface interne bombée dont le ou les rayons de courbure correspondent à celui (ceux) de la partie souple hydrophile à l'état hydraté, préalablement calculé de façon connue en elle même en fonction de la géométrie du palet à sec et de son degré d'hydratation (gonflement). Compte tenu des diamètre habituels choisis pour les palets (d = 11,5 mm), le rayon de courbure nominal avantageusement utilisé pour une surface sphérique est par exemple R = 6,5 mm ; mais d'autres rayons sont bien entendu possibles, notamment un rayon nul correspondant à l'assemblage à plat, ou des rayons R = 8 mm ou 7 mm ou 6 mm.

On a représenté en référence aux figures 3 (a) et 3(b) deux sections de lentille hybride, à l'emplacement de la zone de suture entre partie rigide et partie souple.

La zone de suture est ici soumise aux forces d'adhésions F perpendiculaires à la surface d'adhésion.

Dans le cas d'assemblage à plat (figure 3a), la pente P de la surface de suture est faible par rapport à l'axe de la lentille et la pente projetée P_{PROJ} vaut dans l'exemple environ 0,5 mm.

Dans ce cas la composante verticale de la force d'adhésion étant importante, elle peut entraîner la formation d'un bourrelet lors de l'hydratation de la lentille au niveau de la suture.

L'assemblage à géométrie creuse s'avère par contre utile pour minimiser le module de la composante verticale de la force de collage. Dans ce cas [figure 3(b)] la pente de la surface de suture par rapport à l'axe de la lentille est plus importante que dans le cas d'assemblage à plat, mais sa projection P_{PROJ} est plus faible, par exemple ici égale à 0,19 mm pour un rayon de courbure R variable entre 6 et 7 mm. Pour un rayon R = 8mm, la bande projetée serait quant-à elle et dans l'exemple dimensionnel pris de façon non limitative, de 0,22 mm.

Avec l'assemblage à géométrie creuse on constate donc que la partie souple de la lentille est soumise à des contraintes moins importantes dans la zone de suture, l'effet bourrelet disparaissant.

En référence à nouveau à la figure 2, on traite ensuite au plasma(étape 15) les surfaces 4 et 5 pour augmenter encore les faces d'adhésion qui vont être mises en oeuvre.

Pour ce faire, on utilise un traitement par plasma à froid des palets, par exemple avec des gaz simples comme Ar, H₂, O₂, CO₂, N₂, NH₃... dans des conditions connues de l'homme du métier.

Par exemple avec un traitement au plasma à l'oxygène d'une à deux minutes, en maintenant dans la chambre de traitement une pression de 0,6 mbar absolu, sur un palet rigide de la société Contamac connue sous la dénomination « Optimum extra » et en mettant en oeuvre une puissance raisonnable du générateur à plasma, l'angle de contact (mouillabilité) va par exemple passer de 110° à 15° tout dé suite après traitement, même s'il remonte ensuite jusqu'à 35° après vieillissement dans le liquide de conservation.

L'étape suivante (16) est une étape d'hydratation partielle du palet hydrophile.

Elle se fait par exemple avec un sérum physiologique, prélevé à l'aide d'une micro pipette volumétrique de précision dont la pointe de prélèvement est stérilisée à 120° pendant 30 minutes.

La valeur du volume d'eau à prélever est calculée en tenant compte du volume de sérum physiologique nécessaire pour l'hydratation d'un palet entier, et ce de façon à atteindre le taux d'hydratation fixé, et du rapport existant entre la masse du palet entier et la masse du palet creux.

L'hydratation se fait dans des étuis par exemple pour lentilles de contact en polypropylène étanche.

Les étuis et leurs bouchons à vis sont stérilisés à 120° pendant 30 minutes, le bouchon étant enlevé pendant la stérilisation pour éviter la déformation du matériau.

On constate en général, mais cela dépend bien entendu du matériau constitutif des palets que ceux-ci sont complètement hydratés au bout de 5 jours.

Le protocole d'hydratation prévoit par exemple les étapes suivantes :
a) Détermination du poids moyen des palets souples hydrophiles entiers creux à l'aide d'une balance. Cette étape est nécessaire afin de pouvoir calculer le taux d'hydratation des palets.
b) Nettoyage des palets creux (à l'aide d'un mouchoir) pour enlever tout résidu sous forme de poussière dû à l'étape de formation du creux.
c) Hydratation des palets souples hydrophiles.

L'étape suivante est l'étape 17 de collage entre le palet rigide et le palet souple hydraté.

Elle se fait avec une colle monomère, par exemple au cyanoacrylate, en appliquant les deux surfaces 4 et 5 respectives des palets l'une sur l'autre de façon connue en elle-même et pendant un temps et avec une pression suffisante pour que le collage soit effectif et solide, pour former la pièce composite 1.

Parmi les colles composées à base de cyanoacrylate, on peut par exemple choisir les produits de la société HENKEL connus sous les dénominations Loctite 4011 et Loctite 4061, qui se sont révélées particulièrement intéressantes et notamment la Loctite 4061.

Il ressort ainsi d'essais qu'un palet rigide collé sur un palet souple précédemment hydraté avec un taux d'hydratation de 55,4%, (les palets assemblés ayant ensuite été séchés pendant une semaine à température ambiante comme cela va être décrit ci-après) donnent un bloc extrêmement solidaire

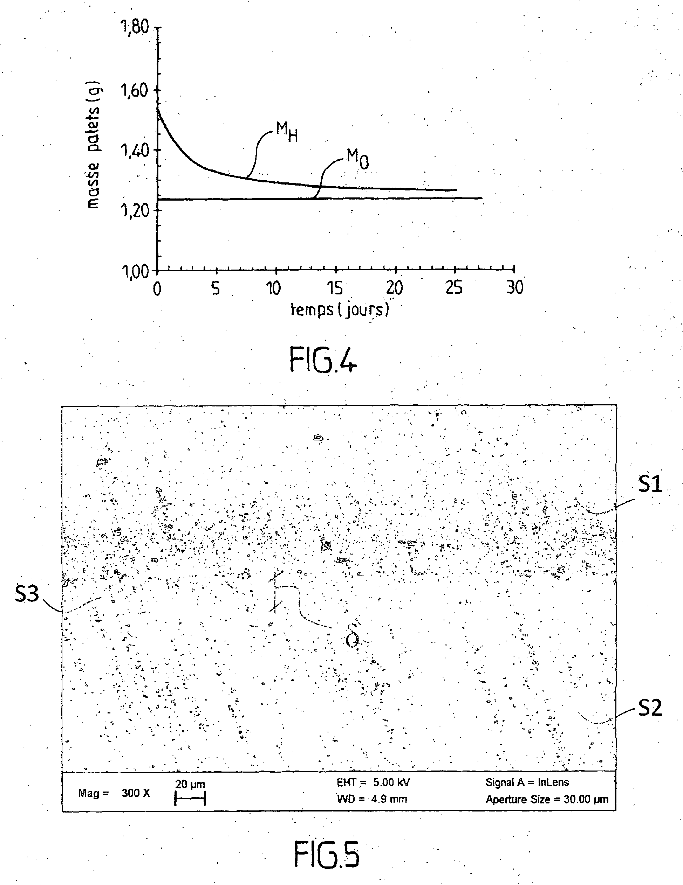

A partir de la pièce assemblée, il a ainsi été en effet obtenu une image (figure 5) de la zone de suture du palet hybride capturé au microscope électronique à balayage avec un grossissement de 300, montrant une excellente solidarisation.

Dans cette image, on peut constater une bonne homogénéité d'adhérence à la jonction entre les deux substrats S1 et S2 et la couche de colle S3 d'épaisseur sensiblement égale à 26 microns.

L'étape suivante est l'étape 17 de séchage.

Après assemblage des pièces composites, celles-ci sont laissées à sécher à condition ambiante pendant un jour, le but étant de perdre l'excès d'eau, avant d'être mis dans des bocaux fermés hermétiquement avec un dessiccateur. Ici, on utilise par exemple, un volume de 750 mm³ contenant du gel de silice (par exemple un produit connu sous le nom de CHAMELON de la société BDH pro labo) afin de tendre vers la déshydratation complète qui est sensiblement atteinte après 14-18 jours.

Le volume de gel de silice utilisé pour sécher environ 100 palets dans ces conditions est de l'ordre du tiers du volume du bocal.

On a montré sur la figure 4 la perte en poids en fonction du temps de 10 pièces composites.

Le temps T = 0 correspond au moment du collage.

La masse attendue pour le séchage complet correspond à la masse des pièces composites hybrides dépourvues de la masse d'eau utilisée pour l'hydratation.

Celle-ci est calculée avec la formule suivante : Meau = (dₛₚ.Vₛₚ) - Vₛₚ.C_{nacl}.

Les valeurs dₛₚ. Vₛₚ et C_{nacl} sont respectivement la densité du sérum physiologique, estimée à 1,013g/ml, le volume de sérum physiologique utilisé pour l'hydratation des palets, et la concentration du sel NaCl dans le sérum physiologique (= 0,9g/100ml).

On constate que la vitesse de séchage des pièces est élevée dans les premiers jours puis qu'elle diminue, la masse tendant progressivement vers la masse attendue calculée pour le séchage complet.

Après une période de l'ordre de deux semaines, on obtient déjà un séchage suffisant pour un usinage correct des pièces composites permettant la fabrication des lentilles hybrides.

Dans le mode de réalisation décrit ici, les pièces sont maintenues pendant trois ou quatre semaines dans les bocaux pour être ensuite conditionnées dans des bocaux vides ou dans des sachets en aluminium à scellés.

Avantageusement, les palets peuvent être séchés en étuve ventilée à 40°C pour obtenir un séchage complet après sept jours.

L'étape suivante est l'étape de taille 18.

On fera ici également référence à la figure 1, cette étape s'effectue en présentant la face 11 externe du palet souple 3 du côté 12 du diamant de taille et ce à partir des paramètres suivants :
T_{b} : épaisseur totale de la pièce composite 1
T : épaisseur partielle de la partie à enlever pour avoir la flèche SAG recherchée.
SAG flèche souhaitée pour un diamètre de lentille D.
SAG₁ : flèche pour le même diamètre D avec un rayon de courbure r.

L'opération d'usinage de lentille va évidemment dépendre des corrections que l'on veut effectuer, de façon comme en elle même.

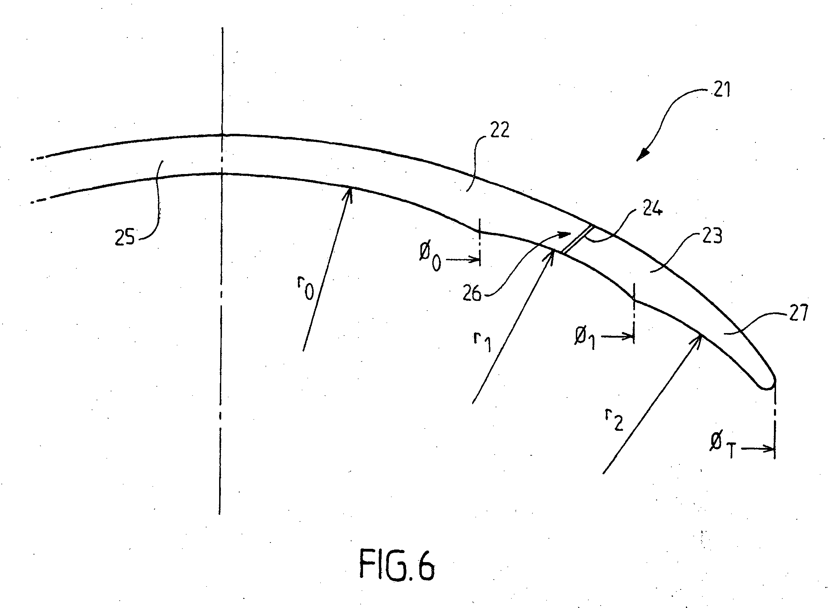

Plus précisément, selon le mode de réalisation de l'invention plus particulièrement décrit et en référence à la figure 6 il est montré en vue partielle de coté, une lentille hybride 21 comportant une partie rigide 22 reliée à une partie souple 23 par un matériau adhésif 24. La partie centrale 25 de la lentille est reliée à une bande annulaire périphérique de dégagement 26, qui est taillée avec un premier rayon r₁ (valeur qui peut par exemple varier entre 9 et 13 mm avec une valeur moyenne r₁ₙ = 11,5mm) sur une zone située au niveau de la jonction, donc à cheval entre la zone rigide 22 et la zone souple 23 hydrophile.

La valeur de r₁ peut être constante pour donner une paroi en forme de portion sphérique, ou variable avec un facteur d'excentricité e.

La partie souple est quant à elle terminée par une extrémité 27 taillée avec un rayon r₂ à sec, pour former une portion plus cambrée que celle obtenue avec le rayon r₁, par exemple inférieur de 4 à 8 mm, pour compenser l'aplatissement de cette zone au moment de l'hydratation ultime de la lentille finie.

En effet la zone souple s'aplatit d'un facteur variable suivant le premier taux d'hydratation utilisé pour la fabrication du palet hybride. Le choix du rayon de taille à sec de cette zone r₂ est dépendant de l'aplatissement souhaité en fonction de la morphologie de la cornée de l'oeil équipé.

Le contactologue détermine le profil de la lentille hybride en fonction des mesures et observations effectuées sur son patient en utilisant les principes connus de l'art de l'adaptation des lentilles de contact.

Cette bande de dégagement crée un espace entre la lentille et la cornée qui empêche un ventousage de celle-ci.

A défaut de bande de dégagement le faible espace uniforme entre la zone rigide et la cornée crée en effet une force de capillarité trop importante au niveau de la zone rigide, ce qui empêche un retrait aisé de la lentille dans certaines configuration d'oeil.

Après l'étape 18 de taille, il est prévu une étape de stockage 19 intermédiaire de courte durée, puis de réhydratation 20, les lentilles hybrides étant ensuite conditionnées dans une solution de décontamination pour lentilles de contact (par exemple dans la solution connue sous la dénomination Nitilens GP fabriquée par la société Avizor) avanr d'être délivrée au patient pour la pose.

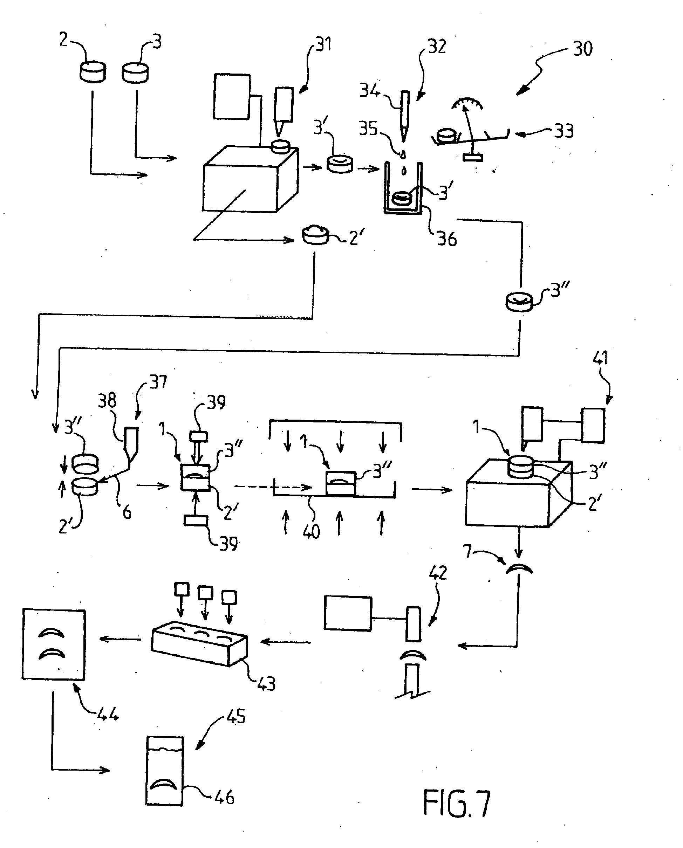

La figure 7 montre schématiquement un mode de réalisation de dispositif 30 selon l'invention.

Les palets rigides 2 et souples 3 sont amenés sur des premiers moyens 31 de taillage connus en eux même, par exemple un tour référencé sous la dénomination Optaform de la société STARLING, permettant d'obtenir les palets 2' et 3' usinés respectivement de façon bombée et en creux.

Les palets 3' hydrophiles sont alors hydratés par des moyens d'hydratation 32 comprenant une balance 33, une pipette volumétrique 34 d'alimentation en sérum physiologique 35 d'une enceinte étanche 36 de rétention dudit palet souple 3'.

Il est ensuite prévu des moyens 37 d'assemblage par collage des deux palets avec de la colle 6 pour obtenir la pièce composite 1, par exemple comprenant un injecteur 38 de colle, et des moyens 39 de presse pendant un temps déterminé et avec une force déterminée, par exemple 10 s avec une pression de 2kg, à adapter de façon connue en soi par l'homme du métier en fonction des spécifications de matériaux utilisés.

Des moyens 40 de séchage sont ensuite prévus, par exemple formés par un support protégé situé dans une pièce à température ambiante régulée pendant un temps suffisant.

Des moyens 41 de tournage-polissage connus en eux même un tour numérique Optoform 40 sont ensuite prévus pour tailler la lentille hybride selon les spécificités du patient et comme décrit ci-avant, avant une étape de contrôle par exemple utilisant des outils 42 de contrôle interférométriques connus en eux même.

Un dernier affinage (polissage, affinage des bords, ...) est éventuellement prévu sur une machine 43 de type connu, avant stockage à sec en 44, pendant un temps réduit (1 à 2 jours), puis stockage humide en 45, en condition d'utilisation, par exemple dans des réservoirs antiseptiques classiques.

Concernant les matériaux utilisés, on notera que les lentilles rigides comprennent de façon non limitative les composants suivants et/ou leurs dérivés, pris seul ou en combinaison :
Triméththyle-siloxyle ; méthyle-méthacrylate ; ethyl-methacrylate ; ethylène glycol di-méthacrylate ; octafluoro pentyl-méthacrylate ; tétra-méthyldisiloxane ; ethylène glycol di-méthacrylate ; pentafluoro phénylacrylate ; 2-(triméthylsiloxyl)méthacrylate ; bis (2-métharyloxyphenyl)propane ; N-[2-(N,N-diméthylamino)éthyle] ; onethacrylate ; N-[2-(n,n-diméthylamino)éthyl ; méthacry ; vinyl-pyrolidone ; N,N-dimathacrylamide ; acrylamine ; hydroxyéthyl méthacrylate ; siloxane éthylène glycol di-méthacrylate ; trifluoroethyle méthacrylate ; pentafluorostyrène ; pentafluoropropyl méthacrylate ; polyester non saturé; p-vinyl benzyl hexafluoroisopropyl éther ; siloxanylalkylamide ; styrènes ; siloxanylstyrènes - polymères résultant du polystirène ; fluorine/styrène ; silicone/styrène.

La partie souple peut quant-à elle être formée ici encore de façon non limitative, à partir de l'un et/ou l'autre des composants suivants, ou de leurs dérivés, pris seuls ou en combinaison :
Poly HEMA ; hydroxyéthyl acrylate ; dihydroxypropyl méthacrylate ; polyethylaneglycol ; methylmethacrylate, ethyl methacrylate, butylmethacrylate (BMA), Hexylmethacrylate (HMA), ehtylacrylate (EA), butylacrylate (BA), acetoxysilane ; ethyleneglycol-dimethacrylate ; phenylethyl acrylate ; zero-gel ; Silicon-Hydrogel ; polyethylene oxide.

Le matériau adhésif peut quant-à lui être également choisi parmi les matériaux adhésifs, résines ou autres mélanges, de monomères et leurs dérivatifs, seul ou en combinaison comme suit : Cyanoacrylates et tous dérivés des cyanoacrylates ; ethylcyanoacrylates ; Butylcyanoacrylates ; Vinylacetate ; trifluoroethanol ; methacrylates (C1 to C6) ; acrylate (C1 to C6) ; ethanediamine ; 2-hydroxyethylmethacrylate (HEMA) et autres esters d'acide methacrylic formulé à partir de bases acrylic bases ; fluorine ; silicone ; fluorine/silicone ; styrene et polymères résultant tels que le polystyrene ; fluorine/styrene ; silicone/styrene.

Comme il va de soi et comme il résulte d'ailleurs de ce qui précède, la présente invention n'est pas limitée aux modes de réalisation plus particulièrement décrits.

Elle en embrasse au contraire toutes les variantes et notamment celles où la bande de dégagement est configurée de façon différente, qui sont dans la portée des revendications annexées.

## Revendications

1. Procédé de fabrication d'une lentille (7, 21) de contact hybride formée d'une partie centrale rigide connectée à une partie périphérique souple (9, 23) par un matériau adhésif (10, 24), **caractérisée en ce que**
à partir d'un palet rigide (2) perméable à l'oxygène et d'un palet souple (3) hydrophile préalablement hydraté à un premier taux d'hydratation déterminé, on forme par collage d'un palet sur l'autre une pièce composite (1) comprenant trois couches superposées, à savoir une première couche formée par le palet rigide (2), une deuxième couche, de liaison, formée par le matériau adhésif (6) et une troisième couche formée par le palet souple 3),
on sèche ladite pièce composite (1) pendant un temps déterminé suffisant pour permettre la déshydratation du palet souple à un second taux d'hydratation déterminé inférieur au premier, puis
on taille à sec par un outil d'usinage ladite pièce composite en présentant la face de la partie souple (3) hydrophile du côté de l'outil pour obtenir la lentille hybride, en ménageant une bande de dégagement (26) sur le pourtour externe (27) de la partie périphérique rigide.

2. Procédé selon la revendication 1, **caractérisé en ce que** on détermine le diamètre (D) de la partie rigide (8,22) par l'usinage plus ou moins profond de la pièce composite.

3. Procédé selon l'une quelconque des revendications précédentes, **caractérisé en ce que** le matériau adhésif (10, 24) comprend du cyanoacrylate.

4. Procédé selon l'une quelconque des revendications précédentes, **caractérisé en ce que** on effectue un traitement de surface du palet rigide (2) avant collage.

5. Procédé selon l'une quelconque des revendications précédentes, **caractérisé en ce que** on effectue un traitement de surface du palet souple (3)sec avant collage.

6. Procédé selon l'une quelconque des revendications 4 ou 5, **caractérisé en ce que** le traitement de surface est un traitement au plasma.

7. Procédé selon l'une quelconque des revendications précédentes, **caractérisé en ce que** on taille au préalable le palet rigide (2) pour que sa surface de collage (4) présente une forme convexe et le palet souple (3) pour que sa surface de collage (5) présente quand le palet est hydraté une forme concave complémentaire à ladite forme convexe.

8. Procédé selon l'une quelconque des revendications précédentes, **caractérisé en ce que** le premier taux d'hydratation est compris entre 50% et 100%.

9. Procédé selon la revendication 8, **caractérisé en ce que** le premier taux d'hydratation est compris entre 54% et 70%.

10. Procédé selon la revendication 9, **caractérisé en ce que** le premier taux d'hydratation est compris entre 55% et 60%.

11. Procédé selon l'une quelconque des revendications précédentes, **caractérisé en ce que** le second taux d'hydratation est inférieur à 10%.

12. Procédé selon la revendication 11, **caractérisé en ce que** le second taux d'hydratation est inférieur à 2%.

13. Dispositif (30) de fabrication d'une lentille de contact hybride (7) formée d'une partie centrale rigide connectée à une partie périphérique souple par un matériau adhésif, à partir d'un palet rigide (2) perméable à l'oxygène et d'un palet souple (3) hydrophile, comprenant un dispositif qui comporte des moyens (31) de taillage d'une surface concave sur le palet souple hydrophile, des moyens (31) de taillage d'une surface convexe complémentaire de la surface concave sur un palet rigide, **caractérisé en ce qu'** il a des moyens (32) d'hydratation partielle du palet hydrophile à un premier taux d'hydratation déterminé, des moyens (37) d'assemblage par collage des deux palets pour former une pièce composite (1), des moyens (40) de séchage de ladite pièce composite pendant un temps déterminé suffisant pour permettre la déshydratation du palet souple à un second taux d'hydratation déterminé inférieur au premier, et des moyens (41) de taille à sec par tournage-polissage de ladite pièce composite pour obtenir ladite lentille hybride.

14. Dispositif selon la revendication 13, **caractérisé en ce que** les moyens (32) d'hydratation comportent une balance (33) de mesure du poids moyen d'un palet souple, une pipette volumétrique (34) d'alimentation en sérum physiologique (35) d'une enceinte (36) étanche de rétention dudit palet souple, et des moyens de calcul du temps d'hydratation à partir du poids moyen dudit palet souple et du taux d'hydratation recherché.

15. Dispositif selon l'une quelconque des revendications 13 et 14, **caractérisé en ce que** il comporte des moyens de préparation des surfaces desdits palets par un traitement au plasma froid.

16. Dispositif selon l'une quelconque des revendications 13 à 15, **caractérisé en ce que** les moyens de séchage de la pièce composite comportent des réceptacles hermétiques de rétention des palets avec du matériau dessicant.

17. Pièce composite (1) pour fabrication d'une lentille de contact hybride (7, 21) formée d'une partie centrale rigide (8, 12) connectée à une partie périphérique souple (9, 23) par un matériau adhésif (10, 24), **caractérisée en ce que** elle comprend un palet rigide (2) perméable à l'oxygène, formant une première couche, un palet souple (3) hydrophile hydraté à un premier taux d'hydratation déterminé, formant une troisième couche, et un matériau adhésif (6) de liaison entre première et troisième couches, formant une deuxième couche, intermédiaire, de liaison.

18. Pièce selon la revendication 17, **caractérisé en ce que** le matériau adhésif (6) contient du cyanoacrylate.

19. Pièce selon l'une quelconque des revendications 17 et 18, **caractérisé en ce que** le premier taux d'hydratation est compris entre 54% et 60%.

20. Pièce selon l'une quelconque des revendications 17 à 19, **caractérisé en ce que** le palet rigide (2) présente une surface de collage (4) de forme convexe et le palet souple (3) une surface de collage (5) de forme concave complémentaire à ladite forme convexe.

21. Lentille hybride (7, 21) obtenue par la taille, après séchage à un taux d'hydratation inférieur à une valeur déterminée, d'une pièce composite (1) selon l'une quelconque des revendications 17 à 20.

22. Lentille hybride selon la revendication 21, **caractérisée en ce que** elle présente un diamètre (D) de sa partie rigide d'une valeur déterminée par la profondeur d'usinage de la pièce composite.

## Patentansprüche

1. Verfahren zur Herstellung einer Hybridkontaktlinse (7, 21), die durch einen harten mittigen Teil gebildet ist, welcher durch ein Haftmaterial (10, 24) mit einem weichen umfänglichen Teil (9, 23) verbunden ist,
**dadurch gekennzeichnet,**
**dass**
- aus einer sauerstoffdurchlässigen harten Scheibe (2) und einer hydrophilen weichen Scheibe (3), die zuvor bis zu einem ersten Hydratationsgrad hydratisiert wurde, durch Kleben einer Scheibe auf die andere ein Verbundteil (1) gebildet wird, das drei aufeinander liegende Schichten aufweist, und zwar eine erste, durch die harte Scheibe (2) gebildete Schicht, eine zweite Schicht, die eine Verbindungsschicht darstellt und durch das Haftmaterial (6) gebildet ist, und eine dritte, durch die weiche Scheibe (3) gebildete Schicht,
- das Verbundteil (1) während einer bestimmten Zeit getrocknet wird, die ausreichend ist, um die Dehydratation der weichen Scheibe bis zu einem zweiten bestimmten Hydratationsgrad, der geringer ist als der erste, zu ermöglichen, und anschließend
- das Verbundteil mit einem Bearbeitungswerkzeug trocken geschliffen wird und dabei die Fläche des hydrophilen weichen Teils (3) dem Werkzeug zugewandt wird, um die Hybridlinse zu erhalten, wobei ein Ablösestreifen (26) auf dem Außenumfang (27) des harten umfänglichen Teils ausgebildet wird.

2. Verfahren nach Anspruch 1,
**dadurch gekennzeichnet,**
**dass** der Durchmesser (D) des harten Teils (8, 22) durch die mehr oder weniger tiefe Bearbeitung des Verbundteils bestimmt wird.

3. Verfahren nach einem der vorhergehenden Ansprüche,
**dadurch gekennzeichnet,**
**dass** das Haftmaterial (10, 24) Cyanoacrylat enthält.

4. Verfahren nach einem der vorhergehenden Ansprüche,
**dadurch gekennzeichnet,**
**dass** vor dem Kleben eine Oberflächenbehandlung der harten Scheibe (2) erfolgt.

5. Verfahren nach einem der vorhergehenden Ansprüche,
**dadurch gekennzeichnet,**
**dass** vor dem Kleben eine Oberflächenbehandlung der weichen trockenen Scheibe (3) erfolgt.

6. Verfahren nach einem der Ansprüche 4 oder 5,
**dadurch gekennzeichnet,**
**dass** es sich bei der Oberflächenbehandlung um eine Plasmabehandlung handelt.

7. Verfahren nach einem der vorhergehenden Ansprüche,
**dadurch gekennzeichnet,**
**dass** vorab die harte Scheibe (2) so geschliffen wird, dass ihre Klebefläche (4) eine konvexe Form aufweist und die weiche Scheibe (3) so geschliffen wird, dass ihre Klebefläche (5) eine konkave, zu der konvexen Form komplementäre Form aufweist, wenn die Scheibe hydratisiert ist.

8. Verfahren nach einem beliebigen der vorhergehenden Ansprüche, **dadurch gekennzeichnet, dass** der erste Hydratationsgrad zwischen 50 % und 100 % liegt.

9. Verfahren nach Anspruch 8,
**dadurch gekennzeichnet,**
**dass** der erste Hydratationsgrad zwischen 54 % und 70 % liegt.

10. Verfahren nach Anspruch 9,
**dadurch gekennzeichnet,**
**dass** der erste Hydratationsgrad zwischen 55 % und 60 % liegt.

11. Verfahren nach einem der vorhergehenden Ansprüche,
**dadurch gekennzeichnet,**
**dass** der zweite Hydratationsgrad geringer als 10 % ist.

12. Verfahren nach Anspruch 11,
**dadurch gekennzeichnet,**
**dass** der zweite Hydratationsgrad geringer als 2 % ist.

13. Vorrichtung (30) zur Herstellung einer Hybridkontaktlinse (7), die durch einen harten mittigen Teil gebildet ist, welcher durch ein Haftmaterial mit einem weichen umfänglichen Teil verbunden ist, aus einer sauerstoffdurchlässigen harten Scheibe (2) und einer hydrophilen weichen Scheibe (3), umfassend eine Vorrichtung mit Mitteln (31) zum Schleifen einer konkaven Fläche auf der hydrophilen weichen Scheibe, Mitteln (31) zum Schleifen einer konvexen, zur konkaven Fläche komplementären Fläche auf einer harten Scheibe, **dadurch gekennzeichnet, dass** sie Mittel (32), um die hydrophile Scheibe teilweise bis zu einem ersten bestimmten Hydratationsgrad zu hydratisieren, Mittel (37) zum Zusammenkleben der zwei Scheiben zur Bildung eines Verbundteils (1), Mittel (40) zum Trocknen des Verbundteils während einer bestimmten Zeit, die ausreichend ist, um die Dehydratation der weichen Scheibe bis zu einem zweiten bestimmten Hydratationsgrad, der geringer ist als der erste, zu ermöglichen, und Mittel (41) zum Trockenschleifen durch Drehschleifen des Verbundteils zur Erzielung der Hybridlinse aufweist.

14. Vorrichtung nach Anspruch 13,
**dadurch gekennzeichnet,**
**dass** die Hydratationsmittel (32) eine Waage (33) zum Messen des mittleren Gewichts einer weichen Scheibe, eine Dosierpipette (34) für die Speisung eines dichten Behälters (36) für die Aufnahme der weichen Scheibe mit physiologischer Kochsalzlösung (35) und Mittel zur Berechnung der Hydratationszeit ausgehend von dem mittleren Gewicht der weichen Scheibe und des angestrebten Hydratationsgrades aufweisen.

15. Vorrichtung nach einem der Ansprüche 13 und 14,
**dadurch gekennzeichnet,**
**dass** sie Mittel zur Vorbereitung der Oberflächen der Scheiben durch eine Kaltplasmabehandlung.

16. Vorrichtung nach einem der Ansprüche 13 bis 15,
**dadurch gekennzeichnet,**
**dass** die Mittel zur Trocknung des Verbundteils dichte Behälter mit Trockenmittel für die Aufnahme der Scheiben aufweisen.

17. Verbundteil (1) zur Herstellung einer Hybridkontaktlinse (7, 21), die durch einen harten mittigen Teil (8, 12) gebildet ist, welcher durch ein Haftmaterial (10, 24) mit einem weichen umfänglichen Teil (9, 23) verbunden ist,
**dadurch gekennzeichnet,**
**dass** es eine sauerstoffdurchlässige harte Scheibe (2) umfasst, die eine erste Schicht bildet, eine hydrophile weiche Scheibe (3), die bis zu einem ersten bestimmten Hydratationsgrad hydratisiert ist und eine dritte Schicht bildet, und ein Haftmaterial (6) zur Verbindung der ersten und der dritten Schicht, welches eine zweite Schicht bildet, die eine Verbindungszwischenschicht darstellt.

18. Teil nach Anspruch 17,
**dadurch gekennzeichnet,**
**dass** das Haftmaterial (6) Cyanoacrylat enthält.

19. Teil nach einem der Ansprüche 17 und 18,
**dadurch gekennzeichnet,**
**dass** der erste Hydratationsgrad zwischen 54 % und 60 % liegt.

20. Teil nach einem der Ansprüche 17 bis 19,
**dadurch gekennzeichnet,**
**dass** die harte Scheibe (2) eine konvex ausgebildete Klebefläche (4) aufweist und die weiche Scheibe (3) eine konkav, zu der konvexen Form komplementär ausgebildete Klebefläche (5) aufweist.

21. Hybridlinse (7, 21), die durch Schleifen eines Verbundteils (1) nach einem der Ansprüche 17 bis 20 nach Trocknung bis zu einem Hydratationsgrad, der geringer als ein bestimmter Wert ist, erzielt wird.

22. Hybridlinse nach Anspruch 21,
**dadurch gekennzeichnet,**
**dass** sie einen Durchmesser (D) ihres harten Teils mit einem Wert aufweist, der durch die Bearbeitungstiefe des Verbundteils bestimmt ist.

## Claims

1. Method for manufacturing a hybrid contact lens (7, 21) formed of a rigid central portion connected to a flexible peripheral portion (9, 23) by an adhesive material (10, 24), **characterised in that**
from a rigid disc (2) permeable to oxygen and a hydrophilic flexible disc (3) previously hydrated to a determined first level of hydration, a composite part (1) is formed by gluing one disc on the other, said composite part (1) comprising three superposed layers, namely a first layer formed by the rigid disc (2), a second, connecting, layer formed by the adhesive material (6) and a third layer formed by the flexible disc (3),
said composite part (1) is dried for a determined time sufficient to allow the dehydration of the flexible disc to a determined second level of hydration lower than the first, then
said composite part is cut dry by a machining tool presenting the face of the hydrophilic flexible portion (3) on the side of the tool to obtain the hybrid lens, forming a release strip (26) on the external circumference (27) of the rigid peripheral portion.

2. Method according to claim 1, **characterised in that** the diameter (D) of the rigid portion (8, 22) is determined by machining the composite part to a greater or lesser depth.

3. Method according to any one of the preceding claims, **characterised in that** the adhesive material (10, 24) comprises cyanoacrylate.

4. Method according to any one of the preceding claims, **characterised in that** a surface treatment is applied to the rigid disc (2) before gluing.

5. Method according to any one of the preceding claims, **characterised in that** a surface treatment is applied to the dry flexible disc (3) before gluing.

6. Method according to any one of claims 4 or 5, **characterised in that** the surface treatment is a plasma treatment.

7. Method according to any one of the preceding claims, **characterised in that** cutting is applied beforehand to the rigid disc (2) so that its surface to be glued (4) exhibits a convex shape and to the flexible disc (3) so that when the disk is hydrated its surface to be glued (5) exhibits a concave shape complementary to said convex shape.

8. Method according to any one of the preceding claims, **characterised in that** the first level of hydration is comprised between 50% and 100%.

9. Method according to claim 8, **characterised in that** the first level of hydration is comprised between 54% and 70%.

10. Method according to claim 9, **characterised in that** the first level of hydration is comprised between 55% and 60%.

11. Method according to any one of the preceding claims, **characterised in that** the second level of hydration is less than 10%.

12. Method according to claim 11, **characterised in that** the second level of hydration is less than 2%.

13. Device (30) for manufacturing a hybrid contact lens (7) formed of a rigid central portion connected to a flexible peripheral portion by an adhesive material, from a rigid disc (2) permeable to oxygen and a hydrophilic flexible disc (3), comprising a device which includes means (31) for cutting a concave surface on the hydrophilic flexible disc, means (31) for cutting a convex surface complementary to the concave surface on a rigid disc, **characterised in that** it has means (32) for partial hydration of the hydrophilic disk to a determined first level of hydration, means (37) for assembling the two discs by gluing them together to form a composite part (1), means (40) for drying said composite part for a determined time sufficient to allow the dehydration of the flexible disc to a determined second level of hydration lower than the first, and means (41) for dry cutting by turning and polishing of said composite part to obtain said hybrid lens.

14. Device according to claim 13, **characterised in that** the means (32) for hydration include a balance (33) for measuring the mean weight of a flexible disc, a volumetric pipette (34) for supplying physiological serum (35) to a sealed enclosure (36) for holding said flexible disc, and means for calculating the hydration time from the mean weight of said flexible disc and the level of hydration being sought.

15. Device according to any one of claims 13 and 14, **characterised in that** it includes means for preparing the surfaces of said discs by a cold plasma treatment.

16. Device according to any one of claims 13 to 15, **characterised in that** the means for drying the composite part include hermetic receptacles for holding the discs with desiccating material.

17. Composite part (1) for manufacturing a hybrid contact lens (7, 21) formed of a rigid central portion (8, 12) connected to a flexible peripheral portion (9, 23) by an adhesive material (12, 24), **characterised in that** it comprises a rigid disc (2) permeable to oxygen, forming a first layer, a hydrophilic flexible disc (3) hydrated to a predetermined first level of hydration, forming a third layer, and an adhesive material (6) for connecting between the first and third layers, forming a second intermediate connecting layer.

18. Part according to claim 17, **characterised in that** the adhesive material (6) contains cyanoacrylate.

19. Part according to any one of claims 17 and 18, **characterised in that** the first level of hydration is comprised between 54% and 60%.

20. Part according to any one of claims 17 to 19, **characterised in that** the rigid disc (2) exhibits a surface to be glued (4) of convex shape and the flexible disc (3) a surface to be glued (5) of concave shape complementary to said convex shape.

21. Hybrid lens (7, 21) obtained by cutting a composite part (1) according to any one of claims 17 to 20, after drying to a level of hydration lower than a determined value.

22. Hybrid lens according to claim 21, **characterised in that** it exhibits a diameter (D) of its rigid portion with a value determined by the depth of machining of the composite part.
